# EUROPÄISCHE PATENTSCHRIFT

(11) **EP 1 812 191 B1**
(45) Veröffentlichungstag und Bekanntmachung des Hinweises auf die Patenterteilung: **16.09.2009**
(21) Anmeldenummer: 05761920.7
(22) Anmeldetag: 26.07.2005
(51) Int. Cl.: B23K 9/025

(54) **ENDLOSES BAND AUS STAHL, DAS GEGEBENENFALLS MIT NUR EINEM TEILBAND AUFGEBAUT IST**
ENDLESS STEEL STRIP, OPTIONALLY PRODUCED WITH ONLY ONE PARTIAL STRIP
BANDE D'ACIER SANS FIN REALISEE EVENTUELLEMENT AVEC UNE SEULE BANDE PARTIELLE

(30) Priorität: 28.07.2004 AT 12902004
(43) Veröffentlichungstag der Anmeldung: 01.08.2007
(73) Patentinhaber: Berndorf Band GmbH, 2560 Berndorf (AT)
(72) Erfinder: HARREITHER, Rupert, A-8600 Oberaich (AT)
(74) Vertreter: Casati, Wilhelm
(86) Internationale Anmeldenummer: PCT/AT2005/000291
(87) Internationale Veröffentlichungsnummer: WO 2006/010184

(56) Entgegenhaltungen:
- DE-C1- 3 225 341
- US-A- 5 456 405
- US-A1- 2002 175 148

## Beschreibung

Die Erfindung hat ein endloses Band wie dieses im Oberbegriff des Anspruchs 1 und im US 2002/0 175 148 beschrieben ist, das gegebenenfalls mit nur einem Teilband aus Stahl aufgebaut ist, zum Gegenstand.

Endlose Bänder aus Stahl haben einen breiten Einsatzbereich. Je nach Einsatzbereich muss auch die Beschaffenheit des Bandes aufgebaut sein. Dabei sind die Oberflächenbeschaffenheit, die Dicke und die Länge des Bleches aber auch die Beschaffenheit und Anordnung der Schweißnaht von besonderer Bedeutung.

Es sind Durchlauföfen für Backwaren bekannt, wobei die Backwaren auf einem mehrere hundert Meter langen endlosen Band angeordnet sind und über das Band durch den Durchlaufofen geleitet werden. Die Geschwindigkeit des Bandes ist hierbei relativ gering und für die Oberflächenbeschaffenheit ist es lediglich erforderlich, dass das Haftvermögen der Backwaren auf der Stahloberfläche nur gering ist. Die Oberfläche der Schweißnaht auf der Arbeitsfläche, also jene Fläche, auf welcher die Backwarenportionen aufgebracht werden, muss lediglich in der Arbeitsebene liegen und dieselbe Rauhigkeit wie die Arbeitsfläche aufweisen.

Besonders hohe Ansprüche werden an die endlosen Bänder einer Bandpresse, insbesondere Doppelbandpresse, gestellt, wenn beispielsweise transparente Kunststofffolien erzeugt werden sollen, da dieselben optisch leer sein müssen. Schweißnähte sind Inhomogenitätsstellen, die gegebenenfalls, selbst wenn dieselben nicht sichtbar sind, beispielsweise für die Wärmeleitfähigkeit, Inhomogenitätsstellen darstellen, dies auch wenn das Schweißen ohne Schweißzusatzwerkstoffe durchgeführt wird.

Um Bänder mit besonders großen Breiten zu erhalten, werden zwei oder auch mehrere Bänder mit Längsschweißnähten verbunden. Diese Längsschweißnähte bedingen, wenn auch nur geringste, Dickenunterschiede bei den Bändern, so dass bei aufgerollten langen Materialbahnen, die mit den Bändern erzeugt wurden, keine gerade Erzeugende vorliegt, sondern je nach Ausbildung der Schweißnähte an diesen Stellen entweder Dickenmaxima oder Dickenminima vorliegen, wodurch ein Verspannen der Materialbahn zu einem nicht mehr plan auszurichtenden Gut eintritt.

Werden die Materialbahnen zu einzelnen Stücken zerschnitten, die übereinander gestapelt werden, so kommt es auch zu Schieflagen der Stapel, die zu Störungen in der Produktion führen können. Um diese Dickenabweichungen entlang der Breite der Materialbahn zu verteilen, ist es bekannt, das endlose Band durch nur ein Teilband zu bilden, wobei nur eine Längsschweißnaht vorliegt, die geneigt zur Längsrichtung des Bandes angeordnet ist. Nachteilig bei einem derartigen Stahlband ist, dass zwischen der Schweißnaht und dem Teilband eine Spannung besteht, die auf die unterschiedliche Länge der Schweißnaht gegenüber des Teilbandes zurückzuführen ist. Dadurch wird die Lebensdauer des endlosen Bandes herabgesetzt.

Die Aufgaben der vorliegenden Erfindung bestehen darin, ein endloses Band zu erzeugen, das erlaubt, die Dickenunterschiede im erzeugten Produkt über die gesamte Breite desselben zu verteilen und die Lebensdauer des Bandes zu erhöhen. Derartige Bänder werden bei Antriebsrollen und Umlenkrollen umgelenkt, und je kleiner der Radius dieser Rollen ist, umso stärker ist die Beanspruchung.

Das erfindungsgemäße endlose Band aus Stahl, das gegebenenfalls mit nur einem Teilband aus dem Stahl aufgebaut ist, das schmäler als das Band ist, und das Band gegebenenfalls nur eine Schweißnaht aufweist, die zumindest einmal spiralförmig um das Band verläuft und zu einer Längsrichtung des Bandes geneigt ist und das Teilband auf einer Oberflächenschichte Druckeigenspannungen aufweist, besteht im Wesentlichen darin, dass eine innere Oberflächenschichte, bezogen auf das endlose Band, die Druckeigenspannungen aufweist, und die Schweißnaht, bezogen auf eine Mittelebene, zwischen der inneren und einer äußeren Oberfläche im Wesentlichen idente Abstände aufweist und somit im Wesentlichen symmetrisch aufgebaut ist. Bei derartigen Bändern ist es bekannt, dass die äußere Oberfläche, also die Arbeitsfläche, Druckeigenspannungen aufweist, um beispielsweise den Abrieb zu verringern oder auch die Spannungsrisskorrosion zu mindern. Weist eine innere Oberflächenschichte Druckeigenspannungen auf, so kann überraschenderweise die Lebensdauer erhöht werden. Dies ist umso verwunderlicher, als die Innenseite des Bandes während des Umlenkens gestaucht wird, also ohnedies mit Druckspannungen versehen wird. Eine symmetrische Ausbildung der Schweißnaht bewirkt, dass die Längendifferenz zwischen Schweißnaht und den anschließenden Bereichen des Teilbandes wesentlich geringer gehalten werden kann und dadurch zusätzlich die Lebensdauer des Bandes erhöht werden kann.

Weist die Schweißnaht dieselbe chemische Zusammensetzung wie das Teilband auf, so können besonders geringe Spannungen zwischen Schweißnaht und Teilband erreicht werden.

Schließt die Schweißnaht mit der Längsrichtung des Bandes einen Winkel von 1° bis 25°, insbesondere von 6° bis 9°, ein, so ist eine gleichmäßige Verteilung der Inhomogenitätsstellen, bedingt durch die Schweißnaht, über die Breite des zu erzeugenden Produktes gewährleistet und weiters besteht der Vorteil, dass die Gesamtlänge der Schweißnaht gering gehalten werden kann.

Ist der Stahl des Teilbandes ausscheidungsgehärtet, so können die Vorteile eines ausscheidungsgehärteten Bandes genutzt werden, wobei die Schweißnaht als solche nicht ausscheidungsgehärtet sein muss, womit der Längenunterschied zwischen Teilband und Schweißnaht geringer gehalten werden kann.

Weist nur eine, u. zw. eine innere, Oberflächenschichte des Teilbandes Druckeigenspannungen auf, so werden der elastischen Dehnung bei der Umlenkung des Bandes geringere Kräfte entgegen gesetzt, wodurch ebenfalls die Lebensdauer des Bandes erhöht werden kann.

Ist die innere Oberflächenschichte des Teilbandes, die an die Schweißnaht anschließt, mechanisch abgetragen, so können Kerbstellen, die zur vorzeitigen Zerstörung des Bandes beitragen, vermieden werden.

Beträgt die Breite der Schweißnaht das 1,0 bis 1,5-fache der Dicke des Teilbandes, so kommt es bei Zugbelastung zu einer Behinderung der Querkontraktion und dadurch zu einer Stützung der Zugfestigkeit einer solchen Schweißnaht.

Weist das Teilband eine Dicke von 0,3 mm bis 3,5 mm, insbesondere von 0,8 mm bis 1,2 mm auf, so liegt ein Band vor, das eine besonders geringe Dicke aufweist, womit beim Umlenken auch bei Rollen von beispielsweise 590 mm keine wesentliche Benachteiligung der Lebensdauer eintritt.

Im Folgenden wird die Erfindung anhand der Zeichnungen und Beispiele näher erläutert.

Es zeigen:
- Fig. 1: einen Ausschnitt aus einem endlosen Band,
- Fig. 2 und 3: einen Querschnitt durch das Band im Bereich der Schweißnähte.

Das endlose Band 1 weist eine Breite b₁ von 2.200 mm auf und ist durch ein umlaufendes Teilband 2 mit einer Breite b₂ von 1.400 mm aufgebaut. Das Teilband 2, in der Zeichnung schmäler dargestellt, ist über nur eine umlaufende Schweißnaht 8, verbunden. Es können auch mehrere Teilbänder miteinander verschweißt sein. Die Schweißnaht 8 schließt mit der Längsrichtung a des endlosen Bandes 1 einen Winkel α von 6,1° ein. Die Breite des endlosen Bandes 1 kann genauso wie die Länge desselben beliebig gewählt werden, da es lediglich erforderlich ist, dass das Teilband 2 entsprechend der gewünschten Länge und der gewünschten Breite spiralförmig nebeneinander gelegt und verschweißt wird.

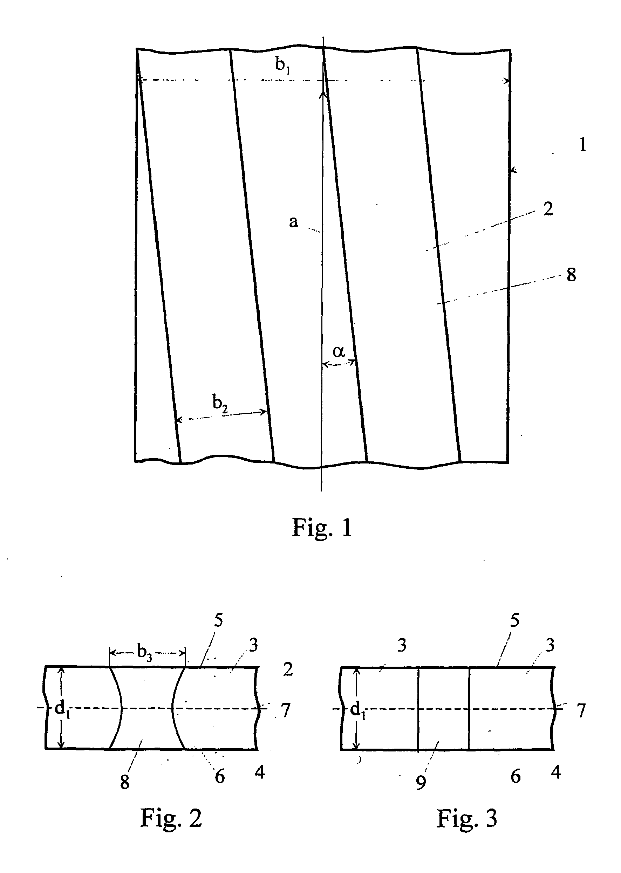

Der in Fig. 2 dargestellte Ausschnitt zeigt im Querschnitt eine Schweißnaht 8 mit den anliegenden Bereichen des Teilbandes 2. Die Schweißnaht weist an der äußeren Oberfläche 5 eine Breite b₃ von 3,3 mm auf, die, bezogen auf die Dicke d₁, von 2,9 mm des Teilbandes 2 ein 1,15-faches darstellt. Symmetrisch zwischen der äußeren Oberfläche 5 und der inneren Oberfläche 6 ist eine imaginäre Mittelebene 7 strichliert dargestellt. Die Schweißnaht 8 ist bezüglich dieser Mittelebene im Wesentlichen symmetrisch ausgebildet, gegebenenfalls liegen Kerbstellen, wie sie beim Schweißen entstehen, vor. Sowohl die äußere Oberflächenschichte 3 als auch die innere Oberflächenschichte 4 sind mechanisch abgearbeitet. Die innere Oberflächenschichte weist Druckeigenspannungen von 400 MPa auf. Die Schweißnaht gemäß Fig. 2 wurde elektrisch mit einer Wolframelektrode und Inertgas (WIG) durchgeführt.

Der in Fig. 3 dargestellte Querschnitt entspricht jenem der Fig. 2 und unterscheidet sich lediglich durch die im Querschnitt rechteckige Schweißnaht 9, die mit einem Nd:YAG-Laser durchgeführt wurde.

### Beispiel 1:

Teilbandabschnitte mit einer Breite von 800 mm und einer Dicke von 0,8 mm wurden durch WIG-Schweißen mit einer Spannung von 10 V, Stromstärke von 29 A und als Inertgas Helium verschweißt. Die Breite der Schweißnaht betrug 2,1 mm. Die Schweißnaht war V-förmig. Das Blech wurde sodann in einer Testanlage um 180° über eine Rolle mit einem Radius von 590 mm umgelenkt. Nach 2 mal 10⁶ Zyklen traten Risse im Bereich in der Schweißnaht auf.

### Beispiel 2:

Teilbandabschnitte mit einer Breite von 1.211 mm und einer Dicke von 0,8 mm, die Teile eines Teilbandes darstellen, wurden durch WIG-Schweißen mit einer Spannung von 8,7 V, Stromstärke von 16 A und als Inertgas Helium verschweißt. Die Breite der Schweißnaht betrug 1,05 mm. Die Schweißnaht war doppel-V-förmig. Zusätzlich wurde eine Seite kugelgestrahlt, so dass Druckeigenspannungen von 400 MPa aufgebaut werden konnten. Das Blech wurde sodann in einer Testanlage um 180° mit der kugelgestrahlten Fläche an der Rolle anliegend über eine Rolle mit einem Radius von 590 mm umgelenkt. Nach 2,8 mal 10⁷ Zyklen traten Risse im Bereich in der Schweißnaht auf.

## Patentansprüche

1. Endloses Band (1), das gegebenenfalls mit nur einem Teilband (2) aufgebaut ist, das schmäler als das Band ist, und das Band gegebenenfalls nur eine Schweißnaht (8, 9) aufweist **dadurch gekennzeichnet, dass** das Teilband (2) aus Stahl hergestellt wird, dass die Schweißnaht (8, 9), zumindest einmal spiralförmig um das Band (1) verläuft und zu einer Längsrichtung (a) des Bandes geneigt ist, und das Teilband (2) auf einer Oberflächenschichte (4, 5) Druckeigenspannungen aufweist, wobei eine innere Oberflächenschichte (4), bezogen auf das endlose Band (1), Druckeigenspannungen aufweist, und die Schweißnaht (8, 9), bezogen auf eine Mittelebene (7), zwischen der inneren (6) und einer äußeren Oberfläche (5) im Wesentlichen idente Abstände aufweist und somit im Wesentlichen symmetrisch aufgebaut ist.

2. Endloses Band (1) nach Anspruch 1, **dadurch gekennzeichnet, dass** die Schweißnaht (8, 9) dieselbe chemische Zusammensetzung wie das Teilband (2) aufweist.

3. Endloses Band (1) nach Anspruch 1 oder 2, **dadurch gekennzeichnet, dass** die Schweißnaht (8, 9) mit der Längsrichtung (a) des Bandes (1) einen Winkel (α) von 1° bis 25°, insbesondere von 6° bis 9°, einschließt.

4. Endloses Band (1) nach Anspruch 1, 2 oder 3, **dadurch gekennzeichnet, dass** der Stahl des Teilbandes (2) ausscheidungsgehärtet ist.

5. Endloses Band (1) nach einem der Ansprüche 1 bis 4, **dadurch gekennzeichnet, dass** nur eine, u. zw. die innere Oberflächenschichte (4), Druckeigenspannungen aufweist.

6. Endloses Band (1) nach einem der Ansprüche 1 bis 5, **dadurch gekennzeichnet, dass** ein Bereich der inneren Oberflächenschichte (6) des Teilbandes (2), die an die Schweißnaht (8, 9) anschließt, mechanisch abgetragen ist.

7. Endloses Band (1) nach einem der Ansprüche 1 bis 6, **dadurch gekennzeichnet, dass** die Breite (b₃) der Schweißnaht (8, 9) ein 1,0 bis 1,5-faches einer Dicke (d₁) des Teilbandes (2) beträgt.

8. Endloses Band (1) nach einem der Ansprüche 1 bis 7, **dadurch gekennzeichnet, dass** das Teilband (2) eine Dicke (d₁) von 0,3 mm bis 3,5 mm, insbesondere von 0,8 mm bis 1,2 mm, aufweist.

## Claims

1. Endless strip (1), optionally produced with only one partial strip (2), which is narrower than the strip, and the strip optionally having only one weld seam (8, 9), **characterized in that** the partial strip (2) is produced from steel, **in that** the weld seam (8, 9) extends in a spiral shape at least once around the strip (1) and is inclined with respect to a longitudinal direction (a) of the strip, and **in that** the partial strip (2) has compressive residual stresses on a surface layer (4, 5), wherein an inner surface layer (4), in relation to the endless strip (1), has compressive residual stresses, and wherein the weld seam (8, 9) is at substantially identical distances between the inner surface (6) and an outer surface (5), in relation to a central plane (7), and therefore has a substantially symmetrical structure.

2. Endless strip (1) according to Claim 1, **characterized in that** the weld seam (8, 9) has the same chemical composition as the partial strip (2).

3. Endless strip (1) according to Claim 1 or 2, **characterized in that** the weld seam (8, 9) forms an angle (α) of from 1° to 25°, in particular of from 6° to 9°, with the longitudinal direction (a) of the strip (1).

4. Endless strip (1) according to Claim 1, 2 or 3, **characterized in that** the steel of the partial strip (2) is precipitation-hardened.

5. Endless strip (1) according to one of Claims 1 to 4, **characterized in that** only one surface layer, namely the inner surface layer (4), has compressive residual stresses.

6. Endless strip (1) according to one of Claims 1 to 5, **characterized in that** a region of the inner surface layer (6) of the partial strip (2), which layer adjoins the weld seam (8, 9), is mechanically removed.

7. Endless strip (1) according to one of Claims 1 to 6, **characterized in that** the width (b₃) of the weld seam (8, 9) is from 1.0 to 1.5 times the thickness (d₁) of the partial strip (2).

8. Endless strip (1) according to one of Claims 1 to 7, **characterized in that** the partial strip (2) has a thickness (d₁) of from 0.3 mm to 3.5 mm, in particular of from 0.8 mm to 1.2 mm.

## Revendications

1. Bande sans fin (1) qui est constituée éventuellement d'une seule bande partielle (2) qui est plus étroite que la bande, et la bande présente éventuellement une seule soudure (8, 9), **caractérisée en ce que** la bande partielle (2) est fabriquée en acier, **en ce que** la soudure (8, 9) s'étend au moins en forme de spirale autour de la bande (1) et est inclinée vers un sens longitudinal (a) de la bande, et **en ce que** la bande partielle (2) présente sur une couche superficielle (4, 5) des contraintes de compression internes, une couche superficielle (4) intérieure présentant par rapport à la bande (1) sans fin des contraintes de compression internes et la soudure (8, 9) présentant par rapport à un plan médian (7) entre la surface (6) intérieure et une surface (5) extérieure des distances essentiellement identiques et étant constitué ainsi de manière essentiellement symétrique.

2. Bande (1) sans fin selon la revendication 1, **caractérisée en ce que** la soudure (8, 9) présente la même composition chimique que la bande partielle (2).

3. Bande (1) sans fin selon la revendication 1 ou 2, **caractérisée en ce que** la soudure (8, 9) avec le sens longitudinal (a) de la bande (1) forme un angle (α) compris entre 1 et 25°, en particulier 6 et 9°.

4. Bande (1) sans fin selon la revendication 1, 2 ou 3, **caractérisée en ce que** l'acier de la bande partielle (2) est durci par précipitation.

5. Bande (1) sans fin selon l'une quelconque des revendications 1 à 4, **caractérisée en ce qu'**une seule, c'est-à-dire la couche superficielle (4) intérieure présente des contraintes de compression internes.

6. Bande (1) sans fin selon l'une quelconque des revendications 1 à 5, **caractérisée en ce qu'**une zone de la couche superficielle (6) intérieure de la bande partielle (2) qui se raccorde à la soudure (8, 9), est entamée mécaniquement.

7. Bande (1) sans fin selon l'une quelconque des revendications 1 à 6, **caractérisée en ce que** la largeur (b₃) de la soudure (8, 9) est comprise entre 1 et 1,5 fois une épaisseur (d₁) de la bande partielle (2).

8. Bande (1) sans fin selon l'une quelconque des revendications 1 à 7, **caractérisée en ce que** la bande partielle (2) présente une épaisseur (d₁) comprise entre 0,3 et 3,5 mm, en particulier 0,8 et 1,2 mm.
